# EUROPEAN PATENT SPECIFICATION

(11) **EP 4 366 038 B1**
(45) Date of publication and mention of the grant of the patent: **01.04.2026**
(21) Application number: 22922353.2
(22) Date of filing: 07.12.2022
(51) Int. Cl.: H01M 10/6556, H01M 10/625, H01M 10/052, H01M 50/20, H01M 50/249

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 24.01.2022 KR 20220009946
(43) Date of publication of application: 08.05.2024
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR); JEON, Jongpil, Daejeon 34122 (KR)
(74) Representative: Plasseraud IP
(86) International application number: PCT/KR2022/019764
(87) International publication number: WO 2023/140496

(56) References cited:
- KR-A- 20160 133 776
- KR-A- 20200 003 600
- KR-A- 20200 125 184
- KR-A- 20200 125 184
- KR-A- 20200 140 476
- KR-B1- 102 329 216

## Description

### [TECHNICAL FIELD]

### Cross Citation with Related Application(s)

This application claims the benefit of Korean Patent Application No. 10-2022-0009946 filed on January 24, 2022 with the Korean Intellectual Property Office.

The present disclosure relates to an electrode assembly and a battery cell including the same, and more particularly, to an electrode assembly with novel cooling structure and a battery cell including the same.

### [BACKGROUND]

With the technology development and increased demand for mobile devices, demand for secondary batteries as energy sources have been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Since medium- or large-sized battery modules are preferably manufactured with as small a size and weight as possible, a prismatic battery, a pouch-type battery, or the like, which can be stacked with high integration and has a small weight relative to capacity, is mainly used as a battery cell of the medium- or large-sized battery modules. Such a battery module has a structure in which a plurality of cell assemblies including a plurality of unit battery cells are connected in series to obtain high output. Further, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

Generally, when a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a medium- or large-sized battery module is included in a battery pack for a vehicle1, the battery module may be frequently exposed to direct sunlight and may be placed under high-temperature conditions, for example, in summer or in a desert.

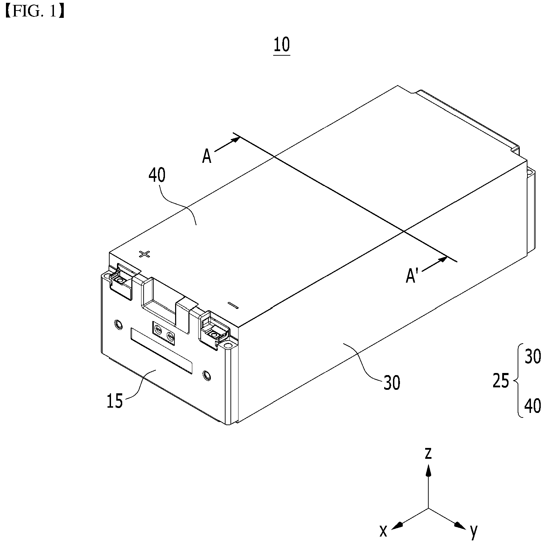

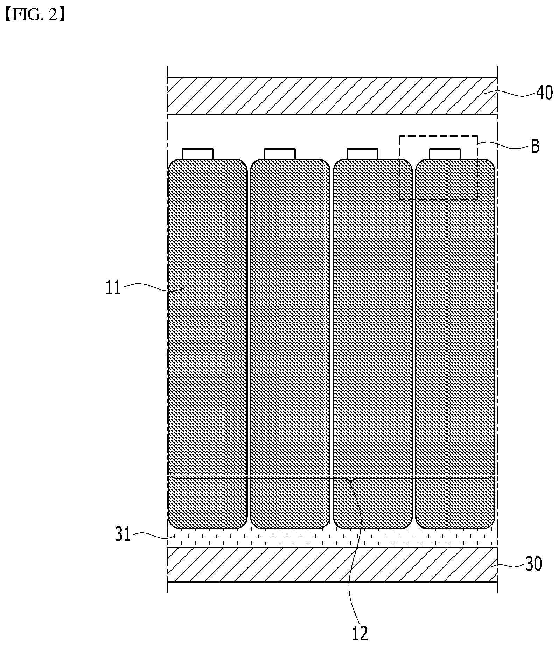

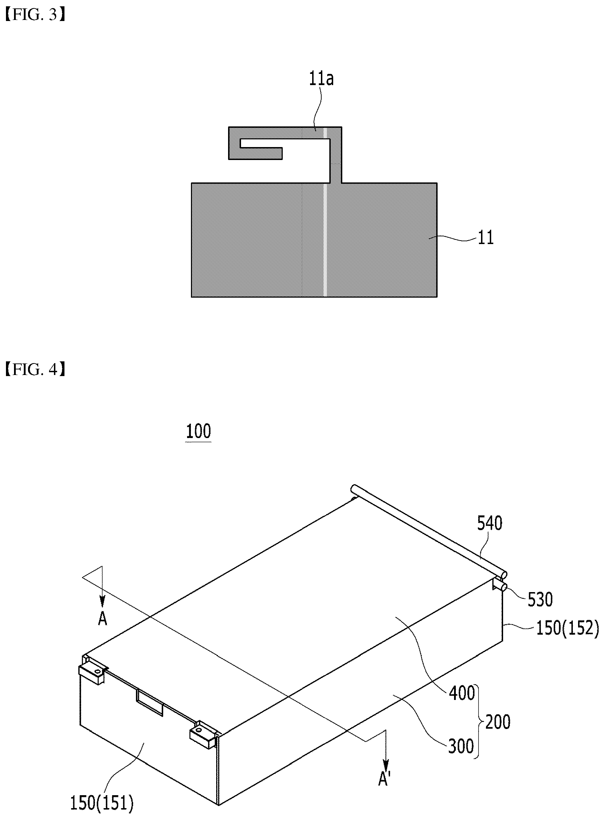

FIG. 1 is a perspective view of a conventional battery module. FIG. 2 is a cross-sectional view taken along the cutting line A-A' in FIG. 1. FIG. 3 is an enlarged view of a section B of FIG. 2.

Referring to FIGS. 1 to 3, a conventional battery module 10 includes a battery cell stack 12 in which a plurality of battery cells 11 are stacked in one direction, a module frame 25 that houses the battery cell stack 12, and end plates 15 that cover the front and rear surfaces of the battery cell stack 12. The module frame 25 includes a lower frame 30 that covers the lower part and both side surfaces of the battery cell stack 12, and an upper plate 40 that covers the upper surface of the battery cell stack 12. Additionally, a thermally conductive resin layer 31 located between the lower part of the battery cell stack 12 and the bottom part of the module frame 25 may be formed.

At this time, referring to FIG. 3, the battery cell 11 of the conventional battery module 10 is configured by folding the sealing part 11a or maintaining it as it is. At this time, when the sealing part 11a is disposed as shown in FIG. 3, it is difficult to utilize the space between the upper plate 40 and the battery cell stack 12 due to the sealing part 11a. Therefore, due to the arrangement of the sealing part 11a, not only it is difficult to achieve an effective cooling effect through the upper part of the battery module 10, but also there is a problem that the cooling performance is deteriorated by an air layer formed to be adjacent to the sealing part 11a, such as the space between the sealing part 11a and the main body of the battery cell 11.

Thus, conventionally, heat generated in the battery cells of a battery module was emitted only through a one-way path via the thermal conductive resin layer formed under the battery cell stack and the bottom part of the module frame. However, in recent years, the need for high capacity, high energy, rapid charging, and the like has continuously increased, the amount of current flowing through the busbar has increased, and the amount of heat generated from busbars, battery cells, and electrode leads has also tended to increase. It is difficult to effectively cool such a heat generation only by a conventional cooling structure alone.

Therefore, there is a need for a new structure for solving the heat generation problem of the battery cell, which occurs according to the needs of high capacity, high energy, rapid charging, and the like.

Document KR 2020 0125184 A discusses a battery module capable of effectively dissipating heat generated from a battery cell. Document KR 102 329 216 B1 relates to a vehicle battery cooling device capable of cooling heat generated from a vehicle battery module.

### [DETAILED DESCRIPTION OF THE INVENTION]

### [Technical Problem]

It is an object of the present invention to provide a battery module that lowers battery cell temperature and thus improves cooling performance, and a battery pack including the same.

### [Technical Solution]

The present invention is a battery according to independent claim 1. Preferred embodiments are defined in dependent claims 2 to 13. The battery module comprises: a battery cell stack including a plurality of battery cells; a module frame that houses the battery cell stack; and a cooling pipe member formed between the upper part of the battery cell stack and the module frame, wherein the cooling pipe member comprises a first cooling pipe part and a second cooling pipe part.

The battery cell comprises a sealing part formed along a length direction of the battery cell, and the cooling pipe member is formed to be adjacent to the sealing part.

The battery module according to the present embodiment is configured such that the sealing part is located between the first cooling pipe part and the second cooling pipe part.

The sealing part may be folded at least once in one direction.

The sealing part may be folded a plurality of times in one direction, and the sealing part folded a plurality of times may be arranged in parallel to the side surface part of the module frame.

The sealing part comprises a first portion, a second portion and a third portion that are connected to each other, and the first portion, the second portion and the third portion may be arranged in parallel to each other.

The sealing part further comprises a first connecting part and a second connecting part, and a length of the first portion may be formed longer than a length of the first connecting part.

The first cooling pipe part and the second cooling pipe part are connected to each other, and a cooling flow path may be formed along the first cooling pipe part and the second cooling pipe part.

The first cooling pipe part and the second cooling pipe part may be formed in parallel to the longitudinal direction of the battery cell.

The first cooling pipe part and the second cooling pipe part form one cooling pipe unit, and the cooling pipe member may comprise a plurality of cooling pipe units.

The cooling pipe member further comprises a coolant inflow part and a coolant outflow part, and the first cooling pipe part may be connected to the coolant inflow part, and the second cooling pipe part is connected to the coolant outflow part.

The battery module further comprises end plates that cover the front and rear surfaces of the battery cell stack, wherein the coolant inflow part and the coolant outflow part may be formed adjacent to the end plate.

The battery module further comprises a thermally conductive resin layer formed between the upper part of the battery cell stack and the module frame, wherein the cooling pipe member may be in contact with the thermally conductive resin layer.

The battery module according to another embodiment of the present disclosure may further comprise a cooling pipe member that is formed between the lower part of the battery cell stack and the module frame.

According to yet another embodiment of the present disclosure, there is provided a battery pack comprising the above-mentioned battery module.

### [Advantageous Effects]

A battery module according to the present invention includes a cooling pipe member formed between the battery cell stack and the module frame, thereby capable of effectively cooling a battery cell whose temperature rises in a high current and rapid charging environment. In addition, the internal temperature deviation of the battery module can be minimized, thereby improving the stability of the battery module.

### [BRIEF DESCRIPTION OF THE DRAWINGS]

FIG. 1 is a perspective view of a conventional battery module;
FIG. 2 is a cross-sectional view taken along the cutting line A-A' in FIG. 1;
FIG. 3 is an enlarged view of a section B of FIG. 2;
FIG. 4 is a perspective view of a battery module according to one embodiment of the present disclosure;
FIG. 5 is a perspective view showing only some components of the configuration of the battery module of FIG. 4 except an upper plate;
FIG. 6 is an exploded perspective view of the battery module of FIG. 4;
FIG. 7 is a perspective view of a cooling pipe member included in the battery module of FIG. 4;
FIG. 8 is an enlarged view of a portion of a cooling pipe member included in the battery module of FIG. 4;
FIG. 9 is a diagram showing a cross section taken along the cutting line A-A' of FIG. 4;
FIG. 10 is an enlarged view of a section B of FIG. 9;
FIG. 11 is a perspective view of a battery module according to another embodiment of the present disclosure as viewed from the rear;
FIG. 12 is a view showing a cross section taken along the cutting line C-C' of FIG. 11;
FIG. 13 is a perspective view showing a battery cell included in the battery module of the present disclosure; and
FIGS. 14 to 16 are diagrams showing a sealing part according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

Now, the battery module according to the present disclosure will be described with reference to FIGS. 4 to 6, 9, 10 and 13.

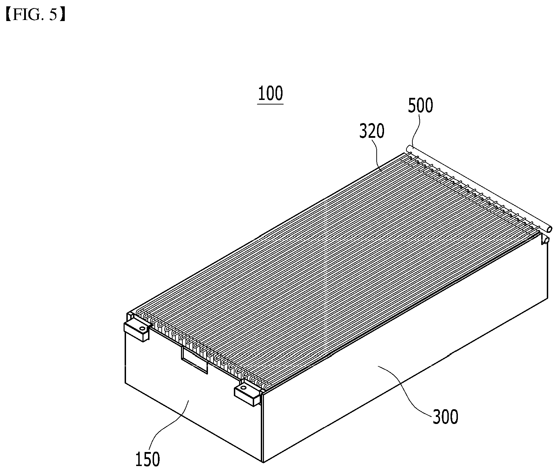

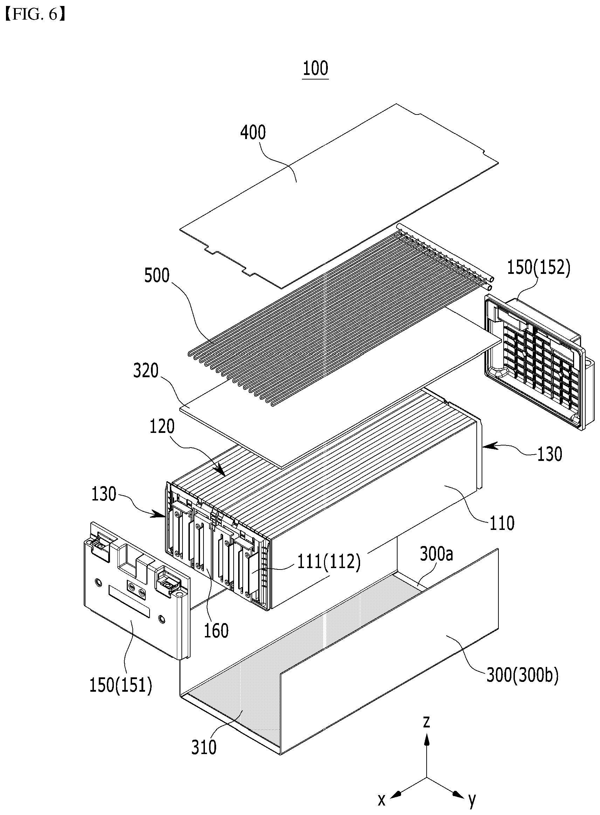

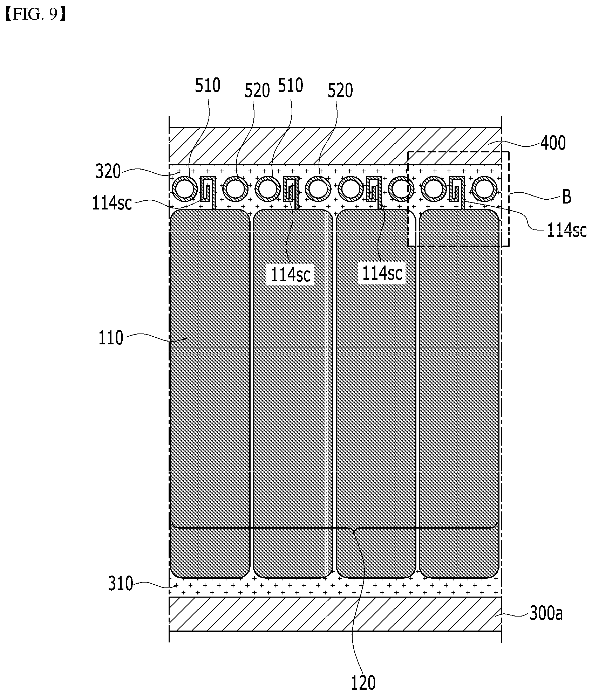

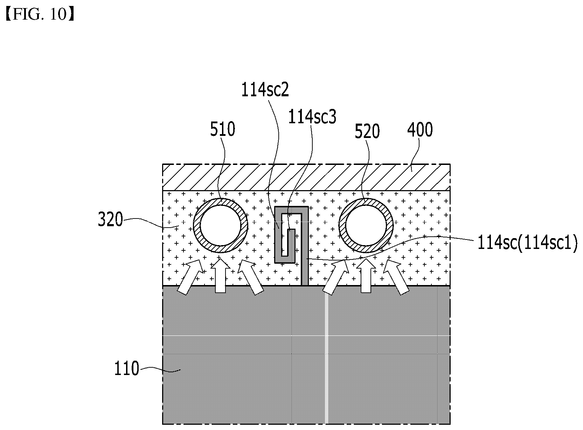

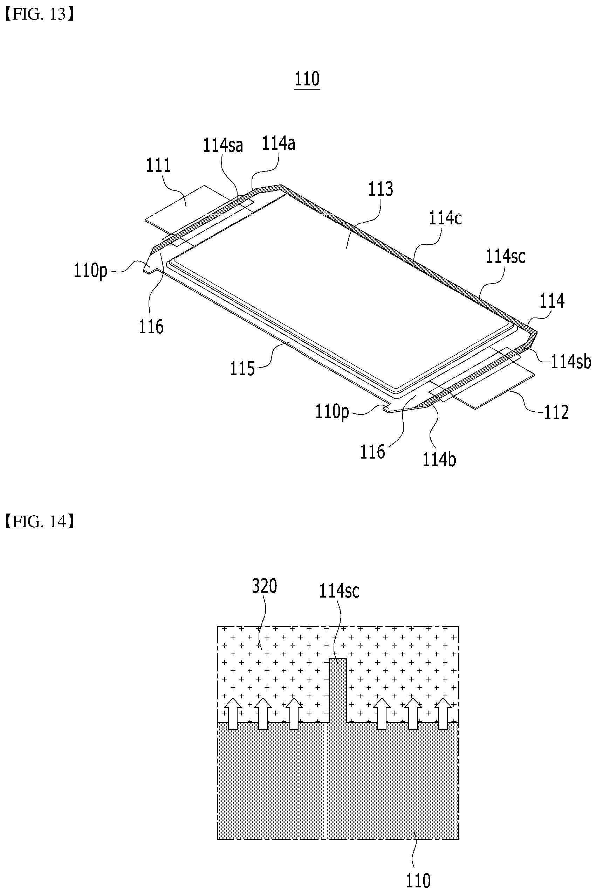

FIG. 4 is a perspective view of a battery module according to one embodiment of the present disclosure. FIG. 5 is a perspective view showing only some components of the configuration of the battery module of FIG. 4 except an upper plate. FIG. 6 is an exploded perspective view of the battery module of FIG. 4. FIG. 13 is a perspective view showing a battery cell included in the battery module of the present disclosure. FIG. 9 is a diagram showing a cross section taken along the cutting line A-A' of FIG. 4. FIG. 10 is an enlarged view of a section B of FIG. 9.

Referring to FIGS. 4 to 6, the battery module 100 according to the present embodiment includes a battery cell stack 120 in which a plurality of battery cells 110 are stacked, and a module frame 200 that houses the battery cell stack 120.

First, the battery cell 110 is preferably a pouch-type battery cell, and can be formed in a rectangular sheet-like structure. For example, referring to Fig. 13, the battery cell 110 according to the present embodiment has a structure in which two electrode leads 111 and 112 face each other and protrude from one end 114a and the other end 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both ends 114a and 114b of a cell case 114 and one side part connecting them in a state in which an electrode assembly (not shown) is housed in a cell case 114. In other words, the battery cell 110 according to the present embodiment has a total of three sealing part s 114sa, 114sb and 114sc, wherein the sealing part s 114sa, 114sb and 114sc have a structure that is sealed by a method such as heat sealing, and the remaining other side part may be composed of a connecting part 115. In particular, the sealing part s 114sa, 114sb, and 114sc may include a sealing part 114sc formed in the longitudinal direction of the battery cell and sealing part s 114sa and 114sb formed in the width direction of the battery cell. At this time, the sealing part 114sc formed in the longitudinal direction of the battery cell is not limited to the shape shown in FIGS. 9 and 10, and may include a single folding structure that is folded once (one time), a non-folding structure that has no folded part, and various forms of sealing part 114sc. The cell case 114 may be made of a laminated sheet including a resin layer and a metal layer. At this time, between both ends 114a and 114b of the cell case 114 may be defined as the longitudinal direction of the battery cell 110, and between one side part 114c connecting both ends 114a and 114b of the cell case 114 and the connecting part 115 may be defined as a width direction of the battery cell 110.

Further, the connecting part 115 may extend long along one edge of the battery cell 110, and a bat-ear 110p may be formed at the end of the connecting part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 may include a terrace part 116 formed to extend from the cell case 114 in the direction in which the electrode leads 111 and 112 protrude.

Such a battery cell 110 may be composed by a plurality of numbers, and the plurality of battery cells 110 may be stacked so as to be electrically connected to each other, thereby forming a battery cell stack 120. Particularly, as shown in FIG. 6, a plurality of battery cells 110 may be stacked along the direction parallel to the y-axis. Thereby, the electrode leads 111 and 112 may protrude in the x-axis direction and the -x-axis direction, respectively.

Meanwhile, when charge and discharge of the battery cell 110 is repeatedly performed, heat is generated. Among them, a lot of heat is generated in a portion adjacent to the electrode leads 111 and 112. That is, since a lot of heat may be generated in the electrode leads 111 and 112 along with the cell main body 113 due to charging and discharging, a novel structure for cooling the battery cell 110 may be required.

At this time, the conventional battery module had a problem that the cooling efficiency is reduced due to the space occupied by the sealing part of the battery cell, and it is difficult to utilize the space when applying the thermally conductive resin layer to the upper part.

Therefore, referring to FIGS. 9, 10 and 13, the battery cell 110 according to the present embodiment further comprises a sealing part 114sc formed along the longitudinal direction of the battery cell 110, wherein the sealing part 114sc is folded at least once or a plurality of times in one direction, and the sealing part 114sc folded a plurality of times may be arranged in parallel to the side surface part of the module frame 200. At this time, the sealing part s 114sc may be arranged side by side in the width direction of the battery cells 110. Further, the sealing part 114sc may be formed in the entire height direction of the battery module 100. Referring to FIG. 13, the width direction of the battery cell 110 means the direction between the sealing part 114sc and the connecting part 115 or between the sealing part 114sc and the bottom part 300a of the frame member 300.

Referring to FIG. 10, the sealing part 114sc folded a plurality of times may include a first portion 114sc1, a second portion 114sc2, and a third portion 114sc3 that are connected to each other. Further, the first portion 114sc1, the second portion 114sc2, and the third portion 114sc3 may be arranged in parallel to each other. A direction in which the first portion 114sc1, the second portion 114sc2, and the third portion 114sc3 may be a direction that is arranged in parallel with the side surface of the module frame 200, and may be a direction that is arranged in parallel with the width direction of the battery cell 110.

More specifically, the sealing part 114sc may be formed into a scroll shape either having at least one folding part by being folded at least once or having a plurality of folding parts by being folded a plurality of times. That is, it may have a single folding structure that is folded at least once or a double folding structure that is folded a plurality of times. At this time, the scroll shape may mean that the direction in which the sealing part 114sc is folded a plurality of times is formed in one direction, so that the cross section of the sealing part 114sc has a rolled or spiral shape having a folding part.

Further, by being folded as above, the edge part located at the outermost side of the sealing part 114sc may be located at the center of the scroll shape. At this time, the edge part located at the outermost side may mean an outermost edge region before the sealing part 114sc is folded. By forming so as to have a scroll shape as above, the edge part located at the outermost side can be folded a plurality of times so as to be located in the center of the scroll shape. At this time, the edge part located at the outermost side may correspond to the third portion 114sc3 of the sealing part 114sc that is folded a plurality of times.

By being folded a plurality of times in one direction as above, the sealing part 114sc can minimize the space occupied compared to a conventional sealing part. **In** particular, the space occupied by the sealing part can be minimized, thereby minimizing the heat transfer resistance.

Here, the sealing part 114sc may include a first connecting part 114sc4 that connects the first portion 114sc1 and the second portion, and a second connecting part 114sc5 that connects the second portion 114sc2 and the third portion 114sc3.

At this time, if the length of the first connecting part 114sc4 of the sealing part 114sc is defined as the horizontal length of the sealing part 114sc and the length of the first portion 114sc1 is defined as the vertical length of the sealing part 114sc, the length of the first portion 114sc1 is formed longer than the length of the first connecting part 114sc4, and thus, a vertical length of the sealing part 114sc may be formed longer than a horizontal length of the sealing part 114sc. Thereby, the region occupied by the sealing part 114sc in the upper part of the battery cell stack 120 is minimized, so that cooling performance can be improved, and also the sealing part 114sc is fixedly formed in a cooling pipe structure described later.

Meanwhile, the module frame 200 includes a U-shaped frame 300 which is opened at its upper, front and rear surfaces and covers the lower part and both side parts of the battery cell stack 120, and an upper plate 400 that covers the upper part of the battery cell stack 120. At this time, the U-shaped frame 300 may include a bottom part 300a supporting the lower part of the battery cell stack 120, and side surface parts 300b each extending upward from both ends of the bottom part 300a. However, the module frame 200 is not limited thereto, and can be replaced with a frame having another shape such as an L-shaped frame or a mono-frame surrounding the cell stack 120 except the front and rear surfaces. The cell stack 120 housed inside the module frame 200 can be physically protected through the module frame 200.

The upper plate 400 can cover the opened upper side surface of the module frame 200. The end plate 150 can cover the front and rear surfaces of the cell stack 120 that are opened in the module frame 200. The end plate 150 can be weld-coupled with the front and rear end edges of the upper plate 400 and the front and rear end edges of the module frame 200. At this time, the end plate may include a front end plate 151 and a rear end plate 152.

A busbar frame 130 can be formed between the end plate 150 and the front and rear surfaces of the battery cell stack 120. The busbar frame 130 can cover the portion of the battery cell stack 120 exposed from the module frame 200. Also, the plurality of busbars 160 mounted to the busbar frame 130 are formed protrusively from the battery cells 110, and can be connected with the electrode leads 111 and 112 mounted on the busbar frame 130. At this time, a slot through which the electrode leads 111 and 112 pass may be formed in the busbar 160. Therefore, the electrode leads 111 and 112 and the busbar 160 passing through the slot of the busbar 160 may contact with each other.

Further, the battery module 100 according to the present embodiment further includes a first thermal conductive resin layer 310 located between the lower surface of the battery cell stack 120 and the bottom part of the module frame 200, that is, the bottom part 300a of the frame member 300, wherein the first thermal conductive resin layer 310 may play a role of transferring heat generated in the battery cell 110 to the bottom of the battery module 100 and fixing the battery cell stack 120.

Moreover, the battery module 100 according to the present embodiment may further include a second thermally conductive resin layer 320 formed between the upper part of the battery cell stack 120 and the upper part of the module frame 200, that is, the upper plate 400. Therefore, the heat generated in the battery cell 110 can be transferred even through the upper part of the module frame 200 via the second thermally conductive resin layer 320.

In particular, the battery module 100 according to the present embodiment includes a heat transfer path to the upper part of the module frame 200 through the second thermally conductive resin layer 320, rather than a one-way path through the bottom part of the module frame 200, thereby capable of improving the cooling performance. At this time, the first thermally conductive resin layer 310 and the second thermally conductive resin layer 320 may be formed by a method of applying and curing a thermal resin. Therefore, the first thermally conductive resin layer 310 and the second thermally conductive resin layer 320 are illustrated in a plate shape, but in the process of applying and then curing the thermally conductive resin, it can be freely deformed in accordance with the shape of other components.

A conventional battery module was configured to discharge the heat generated in the battery cells through the thermal conductive resin layer formed at a lower part of the battery cell. However, there was a problem that the heat generated in the battery cells cannot be efficiently cooled only by the thermally conductive resin layer formed under the battery cell stack and the cooling structure through the one-way path via the bottom part of the module frame.

Therefore, there is a need for a structure that can effectively cool the heat in a situation where the battery cells generate a large amount of heat in a short period of time due to the flow of a high current, such as rapid charging.

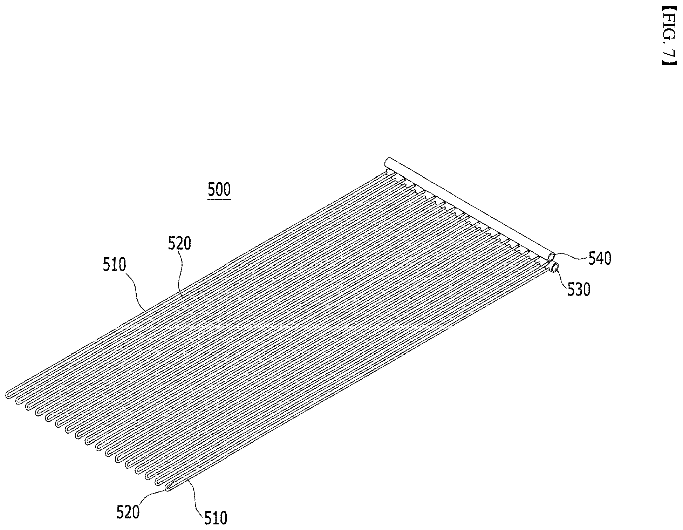

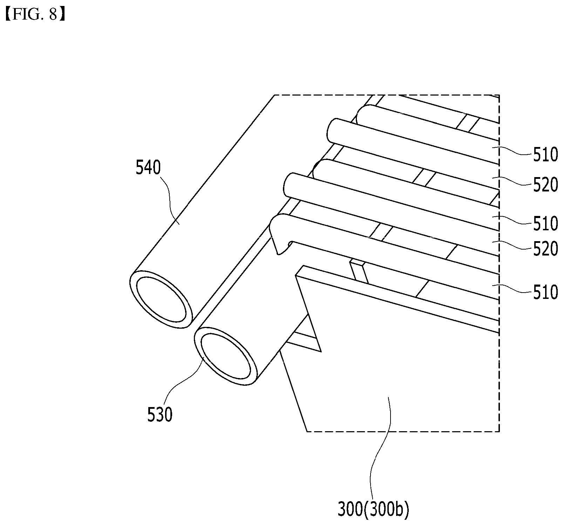

Next, the cooling pipe member 500 of the battery module 100 according to the present embodiment will be described in more detail with reference to the previously listed figures and FIGS. 7 and 8,

FIG. 7 is a perspective view of a cooling pipe member included in the battery module of FIG. 4. FIG. 8 is an enlarged view of a portion of a cooling pipe member included in the battery module of FIG. 4.

Referring to FIGS. 4 to 6, the cooling pipe member 500 of the battery module 100 according to the present embodiment is formed between the upper part of the battery cell stack 120 and the module frame 200. Specifically, the cooling pipe member 500 may be formed between the battery cell stack 120 and the upper plate 400.

Referring to FIG. 7, the cooling pipe member 500 includes a first cooling pipe part 510 and a second cooling pipe part 520. At this time, FIG. 7 shows that the first cooling pipe part 510 is formed on the outermost side of the cooling pipe member 500 so as to be symmetrical with respect to the center of the cooling pipe member 500, but it may also include forming different cooling pipe parts 510 and 520 on both outermost side surfaces of the cooling pipe member 500.

At this time, the first cooling pipe part 510 and the second cooling pipe part 520 may be connected to each other. Therefore, a cooling flow path may be formed along the first cooling pipe part 510 and the second cooling pipe part 520. Further, the first cooling pipe part 510 and the second cooling pipe part 520 may be formed in parallel to the longitudinal direction of the battery cell 110. Therefore, the cooling flow path formed along the first cooling pipe part 510 and the second cooling pipe part 520 may also be formed in parallel to the longitudinal direction of the battery cell 110. A coolant or cooling water may flow through the cooling flow path formed in parallel to the longitudinal direction of the battery cell 110. That is, the upper surface of the battery cell stack 120 can be cooled by the coolant or cooling water flowing along the first cooling pipe part 510 and the second cooling pipe part 520.

Meanwhile, the first cooling pipe part 510 and the second cooling pipe part 520 may form one cooling pipe unit. At this time, the cooling pipe unit may include a state in which the first cooling pipe part 510 and the second cooling pipe part 520 are connected to each other. Therefore, the cooling pipe unit may include a cooling flow path that is formed along the first cooling pipe part 510 and the second cooling pipe part 520. At this time, the cooling pipe member 500 includes a plurality of cooling pipe units, and thereby may include a plurality of first cooling pipe parts 510 and a plurality of second cooling pipe parts 520. That is, the cooling pipe member 500 can be formed with a plurality of cooling pipe units, and therefore, include a plurality of cooling flow paths. In some cases, the cooling pipe units may be repeated so that the cooling flow paths are connected to each other to form one cooling flow path.

Referring to FIG. 8, the cooling pipe member 500 may further include a coolant inflow part 530 and a coolant outflow part 540. The coolant inflow part 530 and the coolant outflow part 540 may be formed adjacent to the end plate 150, and particularly, it may be formed adjacent to the rear end plate 152, and more specifically, it may be formed adjacent to the upper part of the rear end plate 152. In addition, the coolant inflow part 530 and the coolant outflow part 540 may exist inside the battery module 100, but may be exposed to the outside as shown in FIG. 4.

At this time, the first cooling pipe part 510 is connected to the coolant inflow part 530, and the second cooling pipe part 520 may be connected to the coolant outflow part 540. At this time, the first cooling pipe part 510 is connected to the coolant outflow part 540, and the second cooling pipe part 520 is connected to the coolant inflow part 530, so that they can also be cross-connected to each other. Therefore, the battery module 100 according to the present embodiment may be configured such that a coolant is flowed in through the coolant inflow part 530, the battery cell 110 is cooled through the first cooling pipe part 510 and the second cooling pipe part 520, and then the coolant is discharged to the outside of the battery module 100 through the coolant outflow part 540. In addition, a flow of the cooling flow path flowing through the inflow and outflow of the coolant may be formed.

Meanwhile, referring to FIGS. 9 and 10, the cooling pipe member 500 may be in contact with the second thermally conductive resin layer 320. Therefore, an additional heat transfer path may be formed through contact between the cooling pipe member 500 and the second thermally conductive resin layer 320. In particular, the heat transferred from the battery cell 110 to the coolant flowing along the cooling pipe member 500 may be further transferred to the second thermally conductive resin layer 320 and then transferred to the module frame 200. Therefore, a large number of cooling paths for the battery cells 110 can be formed, thereby ensuring the safety of the battery module 100.

Further, the cooling pipe member 500 is formed to be adjacent to the sealing part 114sc. In particular, the sealing part 114sc is located between the first cooling pipe part 510 and the second cooling pipe part 520 of the cooling pipe member 500. Therefore, not only there is no difficulty in space utilization by the sealing part 114sc, but also the stability of the battery module can be improved due to the cooling effect of the battery cell 110 through the cooling pipe member 500. In particular, the sealing part 114sc is located between the first cooling pipe part 510 and the second cooling pipe part 520, so that the sealing part 114sc can be stably fixed.

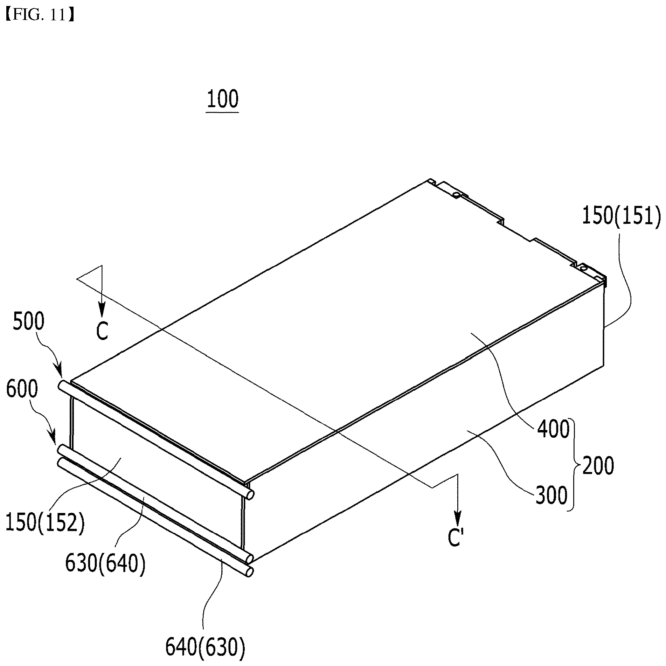

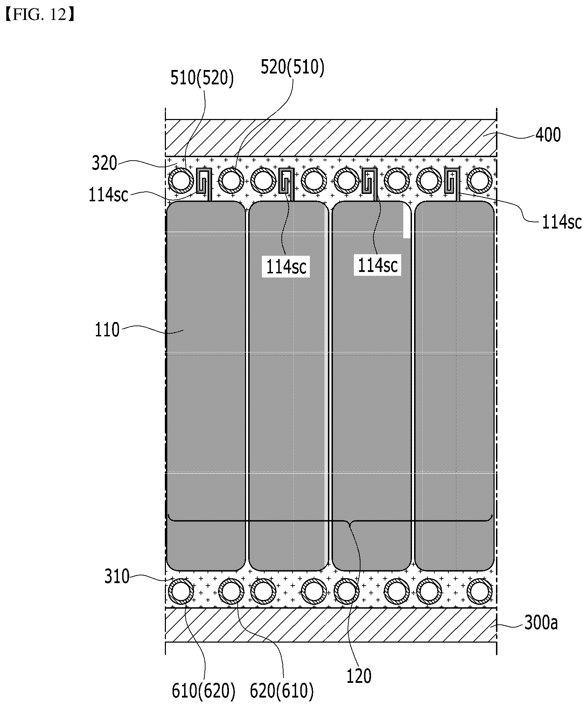

Next, a battery module according to another embodiment of the present disclosure will be described with reference to FIGS. 11 and 12. At this time, since all the contents described above are included in the present embodiment, only different contents will be described.

FIG. 11 is a perspective view of a battery module according to another embodiment of the present disclosure as viewed from the rear. FIG. 12 is a view showing a cross section taken along the cutting line C-C' of FIG. 11.

Referring to FIGS. 11 and 12, the battery module 100 according to the present embodiment further includes a cooling pipe member 600 that is formed between the lower part of the battery cell stack 120 and the module frame 200. At this time, the forms are the same, but in order to distinguish the cooling pipe members 500 and 600 according to the formation position, they will be referred to as the first cooling pipe member 500 and the second cooling pipe member 600 for the sake of explanation.

The battery module 100 according to the present embodiment includes not only a first cooling pipe member 500 formed between the upper part of the battery cell stack 120 and the module frame 200, but also a second cooling pipe member 600 formed between the lower part of the battery cell stack 120 and the module frame 200, thereby capable of forming an additional cooling path.

At this time, the second cooling pipe member 600 may be in contact with the first thermally conductive resin layer 310. Further, the second cooling pipe member 600 may include a first cooling pipe part 610 and a second cooling pipe part 620, and may include a coolant inflow part 630 and a coolant outflow part 640.

Further, the coolant inflow part 630 and the coolant outflow part 640 may be formed adjacent to the rear end plate 152, and more specifically, they may be formed adjacent to the lower part of the rear end plate 152.

The battery module 100 according to the present embodiment includes a first cooling pipe member 500 and a second cooling pipe member 600, thereby capable of forming a plurality of cooling flow paths for cooling the upper and lower parts of the battery cell stack 120. Therefore, not only the heat generation problem of the battery cells 110 can be solved, but also the safety of the battery module 100 can be ensured.

Next, the sealing part included in the battery module according to another embodiment of the present disclosure will be further described with reference to FIGS. 14 to 16. Except for the shape of the sealing part, all the contents described above can be included, and therefore, only the contents different from those described above will be described.

FIGS. 14 to 16 are diagrams showing a sealing part according to another embodiment of the present disclosure.

In the battery module 100 according to the present embodiment, the length of the sealing part 114sc extending toward the upper part of the module frame 200 (i.e., a vertical length of the sealing part 114sc) is equal to or longer than the length extending along the upper part of the battery cell 110 (i.e., a horizontal length of the sealing part 114sc), and also the sealing part 114sc may have various shapes other than the sealing part 114sc of FIGS. 9 and 10.

In one example, as shown in FIG. 14, the sealing part 114sc may have a shape extending from the upper part of the battery cell 110 toward the upper part of the module frame 200 without a portion that is folded. In this case, the area occupied by the sealing part 114sc at the upper part of the battery cell 110 may be minimized. In addition, the whole of the outer surface of the sealing part 114sc may be wrapped by the second thermally conductive resin layer 320. Accordingly, the contact area between the upper part of the battery cell 110 and the second thermally conductive resin layer 320 can be maximized, thereby maximizing the heat transfer area between the battery cell 110 and the second thermally conductive resin layer 320, and further improving the cooling performance of the battery cell 110 due to the second thermally conductive resin layer 320. Further, the sealing part 114sc can be stably formed by being further fixed by the cooling pipe member 500.

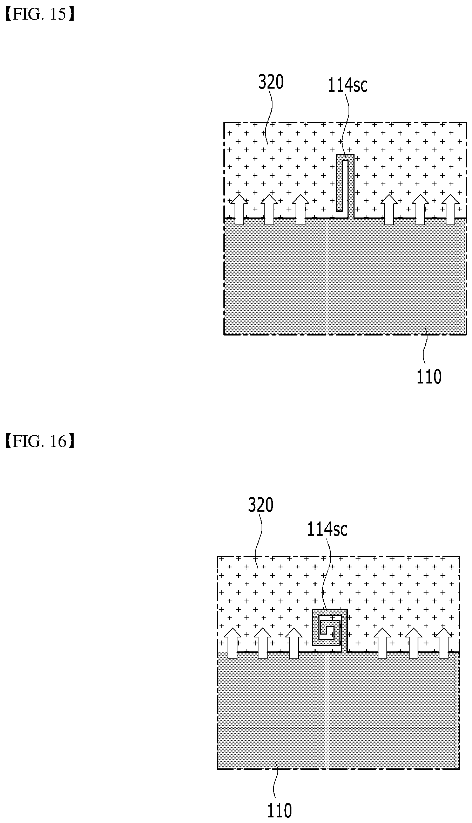

In another example, as shown in FIG. 15, the sealing part 114sc may have a shape that is folded once in a counterclockwise direction. In this case, the area of the sealing part 114sc can be increased compared to FIG. 5, thereby improving the sealing performance of the battery cell 110 and maximizing space utilization within the battery module 100.

In another example, as shown in FIG. 16, the sealing part 114sc may have a shape that is folded a plurality of times. More specifically, the sealing part 114sc may be formed such that the length extending toward the upper part of the module frame 200 and the length extending along the upper part of the battery cell 110 are the same or similar to each other. In this case, the sealing part 114sc is formed such that the length extending toward the upper part of the module frame 200 can be smaller than that of FIGS. 10, 14 and 15, thereby maximizing the area of the second thermally conductive resin layer 320 located above the sealing part 114sc.

The battery cell 110 of the present embodiment can also include other various shapes of the sealing part 114sc. Thereby, the battery cell 110 of the present embodiment can increase the degree of heat transfer between the upper part of the sealing part 114sc and the second thermally conductive resin layer 320, and improve the cooling performance of the second thermally conductive resin layer 320 for the battery cell 110.

Next, a battery pack according to yet another embodiment of the present disclosure will be described.

A battery pack according to the present embodiment comprises the above-mentioned battery module. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

### [Description of Reference Numerals]

100: battery module
110: battery cell
120: battery cell stack
130: busbar frame
150: end plate
160: busbar
200: module frame
300: U-shaped frame
400: upper plate
500, 600: cooling pipe member

## Claims

1. A battery module (100) comprising:
a battery cell stack (120) including a plurality of battery cells (110);
a module frame (200) that houses the battery cell stack (120); and
a cooling pipe member (500) formed between the upper part of the battery cell stack (120) and the module frame (200),
wherein the cooling pipe member (500) comprises a first cooling pipe part (510) and a second cooling pipe part (520),
wherein the battery cell (110) comprises a sealing part (114sc) formed along a length direction of the battery cell (110),
the cooling pipe member (500) is formed to be adjacent to the sealing part (114sc), and
the sealing part (114sc) is located between the first cooling pipe part (510) and the second cooling pipe part (520).

2. The battery module (100) according to claim 1, wherein:
the sealing part (114sc) is folded at least once in one direction.

3. The battery module (100) according to claim 1, wherein:
the sealing part (114sc) is folded a plurality of times in one direction, and
the sealing part (114sc) folded a plurality of times is arranged in parallel to the side surface part of the module frame (200).

4. The battery module (100) according to claim 1, wherein:
the sealing part (114sc) comprises a first portion (114sc1), a second portion (114sc2) and a third portion (114sc3) that are connected to each other, and
the first portion (114sc1), the second portion (114sc2) and the third portion (114sc3) are arranged in parallel to each other.

5. The battery module (100) according to claim 4, wherein:
the sealing part (114sc) further comprises a first connecting part (114sc4) and a second connecting part (114sc5), and
a length of the first portion (114sc1) is formed longer than a length of the first connecting part (114sc4).

6. The battery module (100) according to claim 1, wherein:
the first cooling pipe part (510) and the second cooling pipe part (520) are connected to each other, and
a cooling flow path is formed along the first cooling pipe part (510) and the second cooling pipe part (520).

7. The battery module (100) according to claim 1, wherein:
the first cooling pipe part (510) and the second cooling pipe part (520) are formed in parallel to the longitudinal direction of the battery cell (110).

8. The battery module (100) according to claim 1, wherein:
the first cooling pipe part (510) and the second cooling pipe part (520) form one cooling pipe unit, and
the cooling pipe member (500) comprises a plurality of cooling pipe units.

9. The battery module (100) according to claim 1, wherein:
the cooling pipe member (500) further comprises a coolant inflow part (530) and a coolant outflow part (540), and
the first cooling pipe part (510) is connected to the coolant inflow part (530), and the second cooling pipe part (540) is connected to the coolant outflow part (540).

10. The battery module (100) according to claim 1,
further comprising end plates (150, 152) that cover the front and rear surfaces of the battery cell stack (120),
wherein the coolant inflow part (530) and the coolant outflow part (540) are formed adjacent to the end plate (150, 152).

11. The battery module (100) according to claim 1,
further comprising a thermally conductive resin layer (320) formed between the upper part of the battery cell stack (120) and the module frame (200),
wherein the cooling pipe member (500) is in contact with the thermally conductive resin layer (320).

12. The battery module according to claim 1,
further comprising a cooling pipe member (600) that is formed between the lower part of the battery cell stack (120) and the module frame (200).

13. A battery pack comprising the battery module (100) as set forth in claim 1.

## Patentansprüche

1. Batteriemodul (100), umfassend:
einen Batteriezellenstapel (120), welcher eine Mehrzahl von Batteriezellen (110) umfasst;
einen Modulrahmen (200), welcher den Batteriezellenstapel (120) aufnimmt; und
ein Kühlrohrelement (500), welches zwischen dem oberen Teil des Batteriezellenstapels (120) und dem Modulrahmen (200) gebildet ist,
wobei das Kühlrohrelement (500) einen ersten Kühlrohrteil (510) und einen zweiten Kühlrohrteil (520) umfasst,
wobei die Batteriezelle (110) einen Dichtungsteil (114sc) umfasst, welcher entlang einer Längsrichtung der Batteriezelle (110) gebildet ist,
das Kühlrohrelement (500) derart gebildet ist, dass es benachbart zu dem Dichtungsteil (114sc) ist, und
sich der Dichtungsteil (114sc) zwischen dem ersten Kühlrohrteil (510) und dem zweiten Kühlrohrteil (520) befindet.

2. Batteriemodul (100) nach Anspruch 1, wobei:
der Dichtungsteil (114sc) wenigstens einmal in einer Richtung gefaltet ist.

3. Batteriemodul (100) nach Anspruch 1, wobei:
der Dichtungsteil (114sc) eine Mehrzahl von Malen in einer Richtung gefaltet ist und
der Dichtungsteil (114sc), welcher eine Mehrzahl von Malen gefaltet ist, parallel zu dem Seitenflächenteil des Modulrahmens (200) angeordnet ist.

4. Batteriemodul (100) nach Anspruch 1, wobei:
der Dichtungsteil (114sc) einen ersten Abschnitt (114sc1), einen zweiten Abschnitt (114sc2) und einen dritten Abschnitt (114sc3) umfasst, welche miteinander verbunden sind, und
der erste Abschnitt (114sc1), der zweite Abschnitt (114sc2) und der dritte Abschnitt (114sc3) parallel zueinander angeordnet sind.

5. Batteriemodul (100) nach Anspruch 4, wobei:
der Dichtungsteil (114sc) ferner einen ersten Verbindungsteil (114sc4) und einen zweiten Verbindungsteil (114sc5) umfasst und
eine Länge des ersten Abschnitts (114sc1) länger als eine Länge des ersten Verbindungsteils (114sc4) gebildet ist.

6. Batteriemodul (100) nach Anspruch 1, wobei:
der erste Kühlrohrteil (510) und der zweite Kühlrohrteil (520) miteinander verbunden sind und
ein Kühlströmungsweg entlang des ersten Kühlrohrteils (510) und des zweiten Kühlrohrteils (520) gebildet ist.

7. Batteriemodul (100) nach Anspruch 1, wobei:
der erste Kühlrohrteil (510) und der zweite Kühlrohrteil (520) parallel zu der longitudinalen Richtung der Batteriezelle (110) gebildet sind.

8. Batteriemodul (100) nach Anspruch 1, wobei:
der erste Kühlrohrteil (510) und der zweite Kühlrohrteil (520) eine Kühlrohreinheit bilden und
das Kühlrohrelement (500) eine Mehrzahl von Kühlrohreinheiten umfasst.

9. Batteriemodul (100) nach Anspruch 1, wobei:
das Kühlrohrelement (500) ferner einen Kühlmitteleinströmungsteil (530) und einen Kühlmittelausströmungsteil (540) umfasst und
der erste Kühlrohrteil (510) mit dem Kühlmitteleinströmungsteil (530) verbunden ist und der zweite Kühlrohrteil (540) mit dem Kühlmittelausströmungsteil (540) verbunden ist.

10. Batteriemodul (100) nach Anspruch 1,
ferner umfassend Endplatten (150, 152), welche die vordere und die hintere Fläche des Batteriezellenstapels (120) abdecken,
wobei der Kühlmitteleinströmungsteil (530) und der Kühlmittelausströmungsteil (540) benachbart zu der Endplatte (150, 152) gebildet sind.

11. Batteriemodul (100) nach Anspruch 1,
ferner umfassend eine thermisch leitfähige Harzschicht (320), welche zwischen dem oberen Teil des Batteriezellenstapels (120) und dem Modulrahmen (200) gebildet ist,
wobei das Kühlrohrelement (500) mit der thermisch leitfähigen Harzschicht (320) in Kontakt ist.

12. Batteriemodul (100) nach Anspruch 1,
ferner umfassend ein Kühlrohrelement (600), welches zwischen dem unteren Teil des Batteriezellenstapels (120) und dem Modulrahmen (200) gebildet ist.

13. Batteriepack, umfassend das Batteriemodul (100) nach Anspruch 1.

## Revendications

1. Module de batterie (100) comprenant :
un empilement d'éléments de batterie (120) comportant une pluralité d'éléments de batterie (110) ;
un cadre de module (200) qui abrite l'empilement d'éléments de batterie (120) ; et
un élément de tuyau de refroidissement (500) formé entre la partie supérieure de l'empilement d'éléments de batterie (120) et le cadre de module (200),
dans lequel l'élément de tuyau de refroidissement (500) comprend une première partie de tuyau de refroidissement (510) et une seconde partie de tuyau de refroidissement (520),
dans lequel l'élément de batterie (110) comprend une partie d'étanchéité (114sc) formée le long d'une direction de longueur de l'élément de batterie (110),
l'élément de tuyau de refroidissement (500) est formé pour être adjacent à la partie d'étanchéité (114sc), et
la partie d'étanchéité (114sc) est située entre la première partie de tuyau de refroidissement (510) et la seconde partie de tuyau de refroidissement (520).

2. Module de batterie (100) selon la revendication 1, dans lequel :
la partie d'étanchéité (114sc) est pliée au moins une fois dans une direction.

3. Module de batterie (100) selon la revendication 1, dans lequel :
la partie d'étanchéité (114sc) est pliée une pluralité de fois dans une direction, et
la partie d'étanchéité (114sc) pliée une pluralité de fois est agencée parallèlement à la partie surface latérale du cadre de module (200).

4. Module de batterie (100) selon la revendication 1, dans lequel :
la partie d'étanchéité (114sc) comprend une première portion (114sc1), une deuxième portion (114sc2) et une troisième portion (114sc3) qui sont reliées les unes aux autres, et
la première portion (114sc1), la deuxième portion (114sc2) et la troisième portion (114sc3) sont agencées parallèlement les unes aux autres.

5. Module de batterie (100) selon la revendication 4, dans lequel :
la partie d'étanchéité (114sc) comprend en outre une première partie de liaison (114sc4) et une seconde partie de liaison (114sc5), et
une longueur de la première portion (114sc1) est formée plus longue qu'une longueur de la première partie de liaison (114sc4).

6. Module de batterie (100) selon la revendication 1, dans lequel :
la première partie de tuyau de refroidissement (510) et la seconde partie de tuyau de refroidissement (520) sont reliées l'une à l'autre, et
un trajet d'écoulement de refroidissement est formé le long de la première partie de tuyau de refroidissement (510) et de la seconde partie de tuyau de refroidissement (520).

7. Module de batterie (100) selon la revendication 1, dans lequel :
la première partie de tuyau de refroidissement (510) et la seconde partie de tuyau de refroidissement (520) sont formées parallèlement à la direction longitudinale de l'élément de batterie (110).

8. Module de batterie (100) selon la revendication 1, dans lequel :
la première partie de tuyau de refroidissement (510) et la seconde partie de tuyau de refroidissement (520) forment une unité de tuyau de refroidissement, et
l'élément de tuyau de refroidissement (500) comprend une pluralité d'unités de tuyau de refroidissement.

9. Module de batterie (100) selon la revendication 1, dans lequel :
l'élément de tuyau de refroidissement (500) comprend en outre une partie d'entrée de liquide de refroidissement (530) et une partie de sortie de liquide de refroidissement (540), et
la première partie de tuyau de refroidissement (510) est reliée à la partie d'entrée de liquide de refroidissement (530), et la seconde partie de tuyau de refroidissement (540) est reliée à la partie de sortie de liquide de refroidissement (540).

10. Module de batterie (100) selon la revendication 1,
comprenant en outre des plaques d'extrémité (150, 152) qui recouvrent les surfaces avant et arrière de l'empilement d'éléments de batterie (120),
dans lequel la partie d'entrée de liquide de refroidissement (530) et la partie de sortie de liquide de refroidissement (540) sont formées adjacentes à la plaque d'extrémité (150, 152).

11. Module de batterie (100) selon la revendication 1,
comprenant en outre une couche de résine thermoconductrice (320) formée entre la partie supérieure de l'empilement d'éléments de batterie (120) et le cadre de module (200),
dans lequel l'élément de tuyau de refroidissement (500) est en contact avec la couche de résine thermoconductrice (320).

12. Module de batterie selon la revendication 1,
comprenant en outre un élément de tuyau de refroidissement (600) qui est formé entre la partie inférieure de l'empilement d'éléments de batterie (120) et le cadre de module (200).

13. Bloc-batterie comprenant le module de batterie (100) selon la revendication 1.
